Europäisches Patentamt

European Patent Office

Office européen des brevets

(19)

(11) Veröffentlichungsnummer: **0 169 964**

**A1**

(12) ## EUROPÄISCHE PATENTANMELDUNG

(21) Anmeldenummer: 85102612.0

(22) Anmeldetag: 07.03.85

(51) Int. Cl.⁴: **B 64 C 11/18**

(30) Priorität: 07.03.84 DE 3408363

(43) Veröffentlichungstag der Anmeldung:
05.02.86 Patentblatt 86/6

(84) Benannte Vertragsstaaten:
AT BE CH DE FR GB IT LI LU NL SE

(71) Anmelder: Schmitt, Dieter
Frankfurterstrasse 137a
D-3500 Kassel(DE)

(72) Erfinder: Schmitt, Dieter
Frankfurterstrasse 137a
D-3500 Kassel(DE)

(74) Vertreter: Fritsch, Klaus, Dipl.-Ing.
Richard Wagner Strasse 1a
D-6701 Hochdorf-Assenheim 2(DE)

(54) Propeller.

(57) Es werden Berechnungsformeln für einen Propeller, der insbesondere für Ultra-leicht-Flugzeuge zu verwenden ist, angegeben. Aufgrund dieser Formeln erhält das Blatt einen sich annähernd linear verjüngenden äußeren Bereich (30), dessen Verjüngungswinkel annähernd 10 bis 20° beträgt.

Fig.1

EP 0 169 964 A1

0169964

0 8. JULI 1985

# PROPELLER

Die Erfindung betrifft einen Propeller gemäß dem Oberbegriff des Anspruches 1.

Wichtigstes Element zum Antrieb eines Flugzeuges ist nach wie vor der von einem Motor getriebene Propeller.

Die Entwicklung derartiger Propeller begann im Prinzip mit der Konstruktion des ersten Flugzeuges und endete im wesentlichen mit dem Aufkommen der Strahltriebwerke. Heutige Propeller von Leichtflugzeugen sind daher gegenüber Propellern früherer Jahre kaum ver ändert.

Die Auslegung und Berechnung eines Propellers basierten auf der Überlegung, einen möglichst hohen Luftdurchsatz zu erzielen, wobei berücksichtigt werden mußte, daß insbesondere im Bereich der Nabe und des Motors aufgrund der Umströmung der im Strömungsverlauf hinter dem Propeller liegende Teile Verluste auftreten. Aus diesem Grunde sind die meisten Propeller so ausgelegt worden, daß im Bereich des Außenradius der größte Teil der Luft nach hinten beschleunigt wird. Im Prinzip gilt dies auch für Druckschrauben, also solche Propeller, die an dem hinteren Ende des Flugzeugs angebracht sind.

Die Probleme ändern sich wesentlich dann, wenn man Propeller für langsam fliegende Flugzeuge, insbesondere für die sogenannten

-2-

ultraleichten Flugzeuge entwickelt. Hier kommt es nämlich neben der Leistung insbesondere auf preiswerte Herstellung an, weswegen eine Reihe von Propellern für derartige ultraleichte Flugzeuge aus extrudiertem Aluminiumprofil hergestellt ist, das im Bereich des Außendurchmessers durch spanabhebende Bearbeitung bearbeitet wurden.

Die für die Ultra-leicht-Flugzeuge verwendeten Propeller aus Holz entsprechen im wesentlichen den Propellern, wie sie für normale Leichtflugzeuge verwendet werden.

Der Wirkungsgrad der bekannten Propeller , zumindest beim Ultra-leicht-Flugzeug, ist nach wie vor gering.

Aufgabe der Erfindung ist es daher, einen Propeller der eingangs genannten Art zu schaffen, dessen Wirkungsgrad bei geringen Herstellungskosten deutlich verbessert ist.

Diese Aufgabe wird erfindungsgemäß dadurch gelöst, daß die Blattgeometrie des Propellers bei hoher Blattbelastung derart gewählt und ausgelegt ist, daß die Luftdurchsatzgeschwindigkeit durch die vom Propeller überdeckte Fläche über den Radius von der Nabe nach außenhin konstant ist.

In vorteilhafter Weise wird der Auftriebsbeiwert der Profilgeometrie über das gesamte Blatt konstant ausgebildet.

Um diese eben genannten Merkmale realisieren zu können, sollte die Tiefe $l$ des Propellers und der Einstellwinkel $\varepsilon$ folgender Formel folgen:

$$l \approx k_1 \cdot v \cdot p^{2/3} \frac{V(r)}{k_2 \cdot p^{2/3} + (\omega r)^2} \qquad (1)$$

Hierin bedeuten:

$k_1$ = Konstante, abhängig von d, $\rho$ , ca, B

$k_2$ = Konstante, abhängig von d und

$V(r)$ = Verteilungsfunktion, abhängig vom Radius r

d = Durchmesser

$\rho$ = Luftdichte

Ca = Auftriebsbeiwert

B = Blattzahl

p = Motorleistung

r = Radius, variabel

$\omega$ = Winkelgeschwindigkeit

Der Einstellwinkel E berechnet sich nach

$$\varepsilon \approx \tan \left( \arctan \frac{k_3}{\omega \cdot r} - \alpha_o + \frac{Ca}{Ca'} \right) \qquad (2)$$

Hierin bedeuten:

$$k_3 \approx \sqrt[3]{p/k_2}$$

= Nullauftriebs-Anstellwinkel

$$ca' = \frac{d\,ca}{d\,\alpha}$$

$\alpha$ = Anstellwinkel

Die Konstante $k_3$ ist insoweit auch als Abhängige von w + v, die wiederum abhängig sind von der Leistung p, anzusehen. W ist die Fluggeschwindigkeit und v ist eine bei der Schuberzeugung induzierte zusätzliche Abströmgeschwindigkeit, die sich dann der Abströmgeschwindigkeit w hinzuaddiert.

Ca' ist die differentielle Änderung des Auftriebsbeiwertes bei einer Änderung des Anstellwinkels $\alpha$ und gibt an, um wieviel sich der Auftriebsbeiwert bei einer Anstellwinkeländerung ändert. Dieser Wert ist bei allen aerodynamischen Profilen im flugtechnisch interessanten Bereich annähernd konstant.

Von Bedeutung ist auch noch die Profildicke $d_1$. Diese errechnet sich nach Gleichung (3):

$$d_1 = k_4 \cdot \tan\left(\text{arc tan}\,\frac{k_3}{\omega \cdot r} \quad \text{arctan}\,\frac{w}{\omega \cdot r} + k_5\right) \qquad (3)$$

Hierin sind

$k_4 = 0,281$

$k_5 = 15,7$

$w = $ Fluggeschwindigkeit

Hierzu kommt noch die Regel, daß die Propellerprofilunterseite durch eine Gerade gebildet ist.

Zur Bildung eines Profiles kann jedes Profil verwendet werden, am einfachsten ist das sogenannte Clark-y-Profil einzusetzen. Dabei wird affin je nach Einsatzmöglichkeit die Dicke verändert; variabel sind bezogen auf den Radius die Tiefe 1, die Dicke $d_1$ und der Einstellwinkel $\varepsilon$ .

Ein Propellerblatt, das nach den erfindungsgemäßen Formeln errechnet und gefertigt wird, erhält im Normalfall eine charakteristische Form: das Blatt ist annähernd im ersten Drittel , ausgehend von der Nabe, relativ "dick", es besitzt eine relativ große Tiefe (= Abstand von Propellernase und -hinterkante) und eine relativ große Dicke ( = Abstand von sich gegenüberliegenden Punkten der Blattober- und -unterseite im Bereich der Schwerpunktslage). Von hier ausgehend verjüngt sich das Profil nach außen und läuft zunächst praktisch spitz zu, um dann in einer definierten

0169964

Krümmung zum Rande hin auf Null auszulaufen. Die Verjüngung betrifft dabei sowohl die Tiefe als auch die Dicke. Dabei sind die Profilunterseiten Geraden und die Profil-Schwerpunktslinie verläuft annähernd radial. Die Unterseite verläuft nicht in einer ebenen Fläche, sondern unterliegt - auf grund der Schränkung - einer Torsion. Die Schwerpunktslinie ist die Verbindungslinie aller Schwerpunkte der Profil-Schnittflächen eines Blattes.

Als spitze Verjüngungswinkel haben sich optimal etwa 10 bis 20$^{\circ}$ herauskristallisiert. Diese optimale Form ergibt sich aber auch nur dann, wenn die Blattgeometrie für die langsam fliegenden ultraleichten Flugzeuge errechnet wird. Bei anderen Anwendungen ergeben sich auch abweichende Formen. So wäre es möglich, die Geometrie festzulegen für einen Ventilator oder eine Schiffsschraube. Dann natürlich , weil die Drehzahl erheblich unter der für Flugzeugpropeller liegt oder weil die Dichte des Mediums, in dem sich der Propeller bewegen soll, von der Dichte von Luft erheblich abweicht, wird das Blatt sicher nicht spitz nach außen zulaufen, sondern eine schaufelartige großflächige Gewometrie erhalten.

Eine Propellergeometrie, die insbesondere für Ultra-leicht-Fleuge verwendet werden kann, welche nach den in den Ansprüchen 1 bis 4 angegebenen Regeln konstruiert und hergestellt ist, hat die folgenden

-6-

besonderen Vorteile:

Eine konstante Abströmungsgeschwindigkeit über den Radius bewirkt einen maximalen Wirkungsgrad, wodurch bei minimaler Motorleistung eine maximale Steigflugleistung erzielt wird. Gleichzeitig wird der Verbrauch verringert und die Lebensdauer des Motors erhöht. Weil die Geschwindigkeitsspitze am Außenradius aufgrund der besonderen Formgebung für das Profil verringert ist, wird gleichzeitig auch der abgestrahlte Lärm wesentlich verringert.

Es ist insbesondere zu erreichen, wie aus Versuchen und Berechnungen und Messungen es sich herausgestellt hat, daß bei steigender Fluggeschwindigkeit bei konstanter Leistung die Drehzahl abfällt oder höchstenfalls gleich bleibt; ein Überdrehen des Motors im normalen Geschwindigkeitsbereich des Luftfahrzeugs ist bei Gasgeben praktisch nicht möglich.

Allgemein wurde bei der Festlegung der genannten Formeln eine Energiebetrachtung vorgenommen. Als Randbedingung wird festgelegt, daß die Propellerkreisfläche gleichmäßig belastet wird, d.h., die abströmende Luft eine über den Radius konstante Geschwindigkeit aufweist. Die dazugehörige Blattgeometrie wird bestimmt unter Berücksichtigung der konstitutiven Wirbelbildung am Propellerblatt und in der näheren Umgebung. Dadurch wird ein besonders gleichmäßiger Kreisflächendurchstrom und eine minimale Geräuschemission erreicht. Dabei wird der Propeller im allgemeinen auf den Betriebspunkt größter Häufigkeit ausgelegt, und danach wird anhand der definierten Geometrie das Kennfeld des Propellers berechnet.

Vorteilhafte Ausgestaltungen sind den weiteren Unteransprüchen zu entnehmen.

So wird durch die Merkmale des Anspruches 11 erreicht, daß daß jeder Propeller und jedes Propellerblatt im gesamten Betriebsbereich mit der günstigsten Gleitzahl betrieben werden kann. Dies verringert den Leistungsbedarf und die Lärmentwicklung.

Um zu verhin-dern, daß akustische Resonanzen auftreten, werden vorteilhaft die kennzeichnenden Merkmale des Anspruches 10 angeandt. Das Maß dieses Versatzes wird entsprechend der kritischen Drehzahl und der kritischen Frequenz gewählt. Die kritische Drehzahl liegt etwa bei 1000 Hz, und ist die Drehzahl, die an sich für das Ohr am unangenehmsten ist.

Damit dabei einen gegenseitige Beeinflussung der Blätter durch Wirbelschleppen der in Drehrichtung davor leigenden Blätter verhindert wird, werden gemäß Anspruch 11 je zwei gegenüberliegende Blätter gegenüber den andern axial versetzt. Der Versatz ist dabei von der Drehrichtung abhängig und er ergibt sich aus Steigung und Versatzwinkel (unkonstante Teilung). Bei einer Steigung von 3, 6m würde man einen Versatzwinkel von 4$^{o}$ wählen und dies ergibt einen axialen Versatz von 4 cm, da bei einer derartigen Steigung pro grad Versatzwinkel ein Betrag von 1 cm axial zu versetzen wäre. Wohin in axialer Richtung versetzt werden muß, hängt von der Drehzahl ab. Ein Umfangsversatz in Drehrichtung gesehen würde einen axialen Versatz nach vorn und ein Umfangsversatz entgegen der Drehrichtung einen axialen Versatz nach hinten ergeben.

Erfindungsgemäß also wird der Propeller so bemessen, daß die Blattgeometrie im gesamten Betriebsbereich so gewählt ist., daß die Luftfurchsatzgeschwindigkeit durch die vom Propeller überdeckte Fläche konstant und der Auftriebsbeiwert ebenfalls konstant ist- Zusützlich kommt noch hinzu, daß der Lufteintritt zum Propellerblatt stoßfrei erfolgt. Stoßfreie-r Eintritt bedeutet, daß die Geometrie so gewählt wird, daß ein Abreißen der Strömung am Propeller über den gesamten Betriebsbereich vermieden ist. Dies wird durch die erfindungsgemäße Bemessungsregel erreicht.

-6b-

Bsondere Vorteile werden insoweit erreicht, daß es mit der Erfindung möglich ist, den Propeller schon mittels einer CNC-Werkzeugmaschine zu fertigen bzw. die Fertigung zu beginnen, wenn die Konturen noch berechnet werden.

Auf Grund der Erfindung ergibt sich, daß die Verwirbelung allgemein hinter dem Propeller geringer ist als vor dem Propeller, was folgendes bedeutet: wenn das Flugzeug in relativ turbulenter oder stark verwirbelter Luft bewegt, dann wird diese Luftsträmung durch den Propeller im Betrieb "geglättet." Damit wird hinter dem Propeller die Geräuschentwicklung bei maximaler Abströmgeschwindigkeit minimiert.

Die Leistungsdaten sind mathematisch mit großer Zuverlässigkeit zu ermitteln, was eine Einsparung an Versuchsarbeiten mit sich bringt. In gleicher Weise können die Geräuschemissionen zuverlässig vorherbestimmt werden.

-7-

-7-

Anhand der Zeichnung, in der einige Ausführungsbeispiele dargestellt sind, sollen die Erfindung und weitere vorteilhafte Ausgestaltungen näher erläutert und beschrieben werden.

Es zeigt:

Fig. 1          eine perspektivische Darstellung eines Zweiblattpropellers, schematisch gezeichnet,

Fig. 2          eine Darstellung der der Fig. 1, bei einer anderen Auslegung des Propellers,

Fig. 3          ein Vierblattpropeller ,

Fig. 4          ein Dreiblattpropeller für ein spezielle Anwendung,

Fig. 5          eine schematische Darstellung eines Kennblattes
                des Propellers gemäß Fig. 3,

Fig. 6          eine schematische Darstellung eines Vierblattpropellers ähnlich dem der Fig. 3,
                ausgelegt für einen üblichen Einsatz bei Ultra-
                leichtflugzeugen und

Fig. 7          die Blattspitzenkontur des Propellers nach Fig. 6

Fig. 8          eine schematische Darstellung des Umfangsversatzes bei einem 8-blättrigen Propeller und

Fig. 9          eine Seitenansicht des Propellers nach Fig. 8

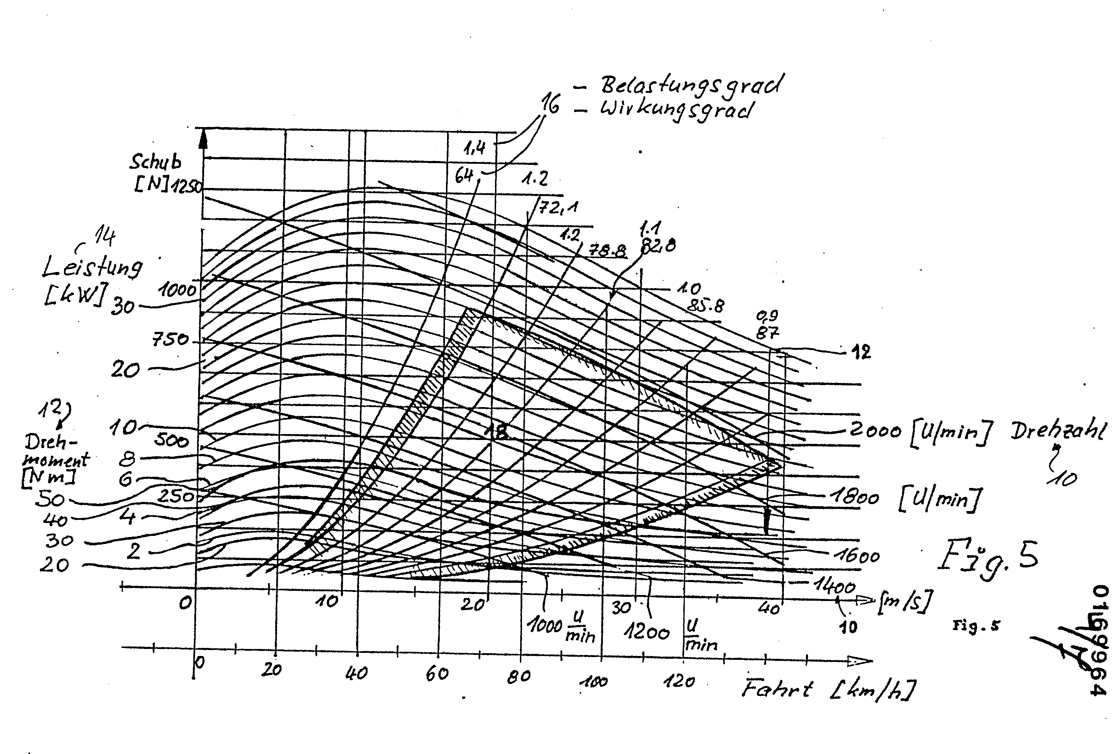

Es wird zunächst bezuggenommen auf die Fig. 5. Das dort angegebene Schaubild zeigt ein Diagramm, bei dessen Abzisse der Schub
in Newton und auf dessen Ordinate die Geschwindigkeit des Luftfahrzeugs in m/s bzw. km pro Stunde (Fahrt)aufgetragen ist. Das Schaubild enthält Linien 10 konstan-ter Drehzahl, 12 konstanten Drehmomentes, 14 konstanter Leistung und 16 konstanter
Belastung. Diese Linien konstanter Belastung entsprechen Linien gleichen
Wirkungsgrades. Man erkennt aus dem Diagramm gemäß Fig. 5, daß
in einem Fahrbereich von 50 km/std. bis etwa 90 km/std. die Drehzahl bei gleicher Leistung des Motors angenähert parallel zu der
Kurve der Leistung verläuft, d. h., angenähert konstant bleibt. Dies
bedeutet, daß in diesem Bereich zwischen 50 bis 90 km/std., der
für ein ultra-leichtes Flugzeug von Bedeutung ist, ein Überdrehen des
Motors beispielsweise bei einem Sinkflug und dadurch bewirkter
Fahrterhöhung nicht zu einem Überdrehen des Motors führt. Bei anderen
Propellerauslegungen, also bei Auslegungen, bei denen der Durchmesser, die Steigung und weitere Werte geändert worden sind,
erhält man in diesem Fahrtbereich sogar eine wenn auch geringfügige
Drehzahlabnahme. In jedem Falle aber führt eine Fahrterhöhung nicht
zu einer Erhöhung der Drehzahl des Motors, so daß in diesen Bereichen eine Motorbeschädigung verhindert werden kann. Der Betriebsbereich, in dem der Propeller optimal betrieben werden kann, ist dann in der Fig. 5 durch die Schraffur 18 angedeutet. In diesem Bereich befindet sich auch der Wert des geringsten Geräuschpegels.

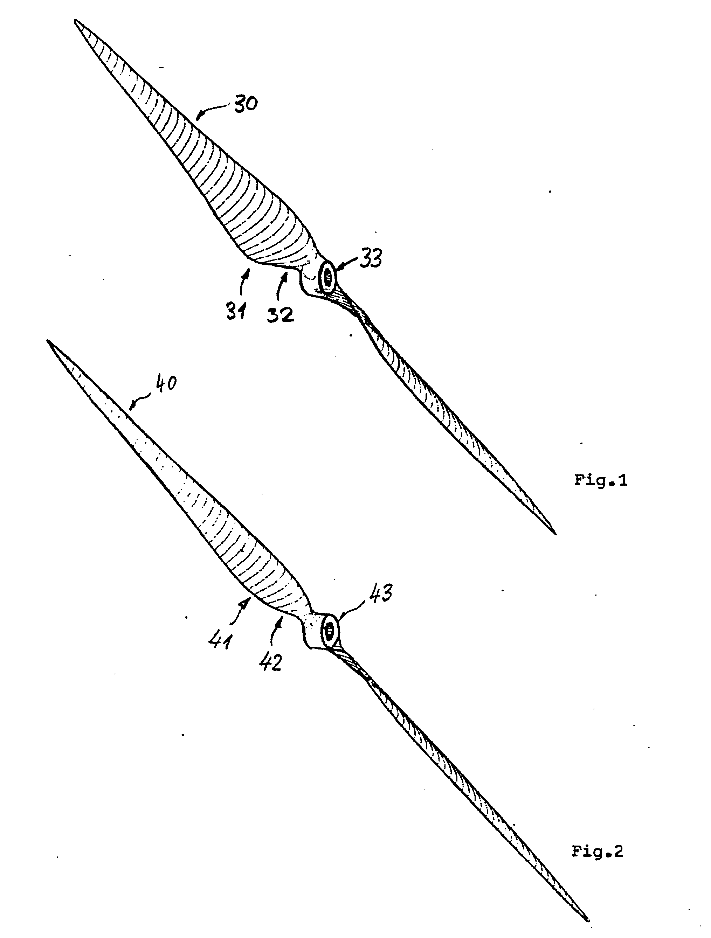

Die Fig. 1 bis 4 zeigen Propeller mit unterschiedlicher Auslegung. Der Propeller gemäß Fig. 1 ist berechnet für einen Durchmesser von 1, 5 mtr., für eine optimale bzw. meist benutzte Betriebsdrehzahl n = 2.000 Umdrehungen pro Minute, bei einer Leistung von 10 KW. Die mit dem Propeller erzielbare Fahrt sei 14 mtr. pro Sek. und der Belastungsfaktor sei 0,9 . Die Bezugstiefe beträgt bei 70% des Radius 8,1 cm und die Steigung beträgt 80 cm. Man erkennt, daß der Propeller im äußeren Bereich 30 eine nach außenhin sehr schlanke, fast spitz zulaufende Form aufweist, wogegen er im inneren Bereich 31 verhältnismäßig dick ist. Im Nabenbereich 32 bei R $\approx$ 10 cm wird der Propeller aus Festigkeitsgründen an die Nabe 33 angepaßt, so daß dort eine nicht der Rechenregel entsprechende Dicke vorhanden ist.

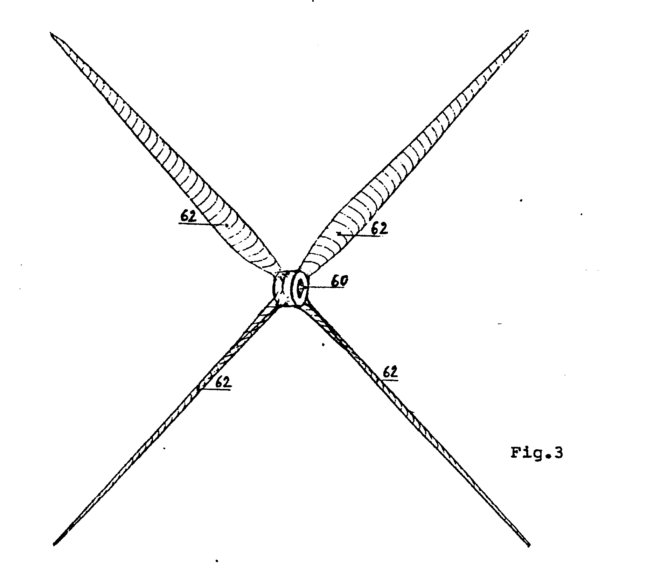

Die Fig. 2 zeigt einen nach gleichen Kriterien berechneten Propeller mit zwei Blättern mit einem Durchmesser von 1,7 mtr., einer Betriebsnenndrehzahl von 2.000 Umdrehungen pro Minute mit 13 KW Leistung, ausgelegt für eine Fahrt von 23 mtr. pro Sekunde, einer Belastung von o, 8 einer Steigung von 96,7 cm und einer Bezugstiefe von 5, 9 mm. Das Profil hat, wie man erkennt, eine ähnliche Form wie dasjenige der Fig. 1; es ist lediglich länger und schmaler ausgebildet. Dennoch ist das charakteristische spitze Zulaufen des Blattes nach außen hin (Bereich 40) nicht zu verkennen, ebenso wie der Übergangsbereich 42 von Nabe 43 zu dem relativ dicken Bereich 41 ähnlich geformt ist, nur aufgrund anderer Auslegungsdaten erheblich schlanker.

Die Fig. 3 zeigt einen nach den gleichen Kriterien berechneten Vier-Blattpropeller mit einem Durchmesser von 1, 5 mtr., einer Drehzahl von 1.600 Umdrehungen pro Minute und einer zugehörigen Leistung von 8 kW, ausgelegt für eine Fahrt von 16 mtr. pro Sekunde. Die Belastung besitzt den Faktor 1,1; die Tiefe ist 3,94 cm und die Steigung 111,51 cm. Man erkennt auch hier den charakteristischen, spitz zulaufenden Endbereich des Propellers (s. weiter unten).

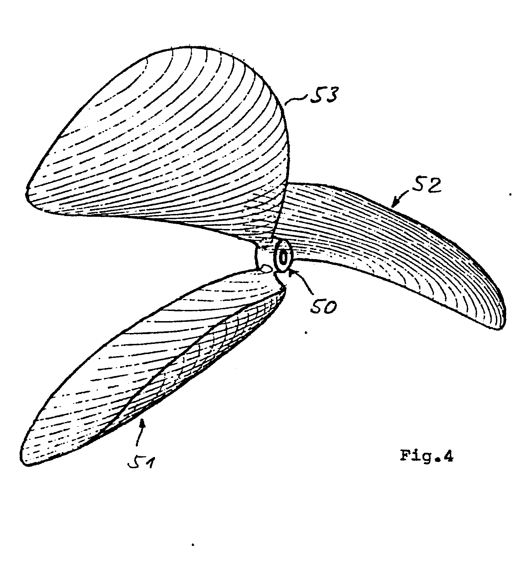

Die Fig. 4 zeigt eine Konstruktion eines Propellers, der für Luftfahrzeuge eigentlich nur wenig geeignet ist, sondern der ausgelegt ist auf andere als beim Ultra-Leichtflugzeugen übliche Randbedingungen. Solche Blätter lassen sich für Schiffschrauben oder Ventilatoren einsetzen. Der Außendurchmesser beträgt 1 mtr.; die Nenndrehzahl 400 Umdrehungen pro Minute bei einer Leistung von 2 Kw. Die damit erzielbare Fahrt beträgt - in Luft - 20 mtr. pro Sek. bei einer Blattzahl von drei. Der Belastungsfaktor beträgt o,3; die Steigung 302,98 cm und die maximale Tiefe des Blattes 73,6 cm. An die Nabe 50 schließen sich drei schaufelförmige Blätter 51,52, 53 an, die insoweit charakteristische Form der Blätter gemäß Fig. 1 bis 3 nicht aufweisen. Dies liegt daran, daß hier eine erheblich niedrigere Drehzahl vorausgesetzt wird. Allerdings sind solche Formen bei Luftfahrzeugen auch noch nicht eingesetzt worden. Sie sind aber dennoch aus den erfindungsgemäßen Formeln berechnet worden.

Die Propeller, insbesondere die der Fig. 1 bis 4 , lassen sich als Spritzgußteil aufgrund ihrer Form sehr gut herstellen. Ist das Kennfeld des Propellers und die Drehmomentenlinie des Motors bekannt, läßt sich durch geeignete Getriebeanordnung die Motor-Propeller-Kombination leicht optimieren bzw. unterschiedliche Motoren an den Propeller lassen sich leicht anpassen. Der Propeller kann durch geeignetes optimales finish (Endbearbeitung) in seiner Wirkung noch erheblich verbessert werden, in dem die Oberfläche möglichst glatt ausgebildet wird.

Derartige Propeller können natürlich auch als Motorseglerpropeller eingesetzt werden. Dabei besteht die Möglichkeit, daß insgesamt 8 Propellerblätter vorgesehen werden können. Die übliche Anzahl der Blätter beträgt 2; es besteht auch die Möglichkeit 4 , gleich ausgebildete Blätter zu verwenden und in einer weiteren, durchaus sinnvoll zu realisierenden Form können 4 Blätter auf eine Nabe angebracht werden, wobei 2 sich gegenüberliegende jeweils gleiche aber gegen über den anderen unterschiedliche Längen aufweisen.

Es können dabei je zwei gleichausgebildete Zweiblattpropeller oder je zwei Zweiblattpropeller mit unterschiedlicher Blattlänge zusammengesetzt werden, wodurch besondere Herstellungsvorteile erreichbar sind.

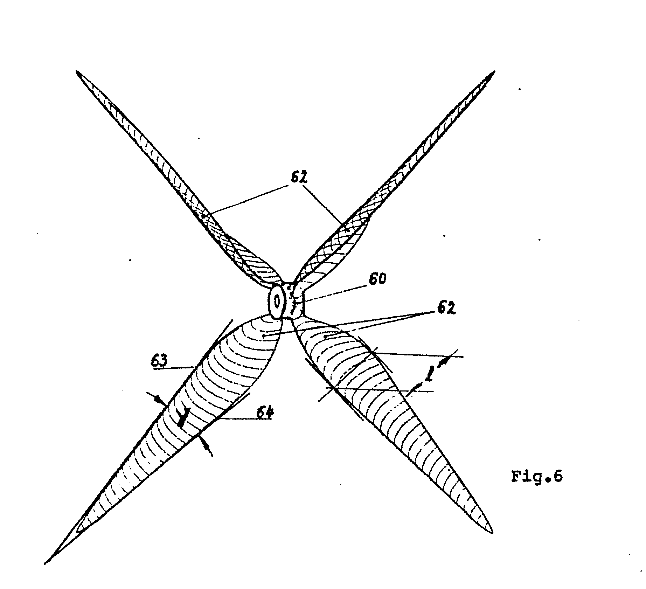

Eine typische Profilgeometrie bzw. Propelleranordnung für Ultra-Leicht-Flugzeuge besitzt einen Durchmesser von 1, 3 mtr. ; die Drehzahl beträgt 1. 800 Umdrehungen pro Minute bei einer Leistung von 20 kW. Als betriebsmäßig optimale Fahrt ist 15 mtr. pro Sec. gewählt; die Blattzahl ist 4. Belastung dabei ist 1, 2 mit einer Steigung von 119, 48 und einer Tiefe von 8, 5 cm. Eine derartige Konstruktion entspricht einer Ausführung etwa derjenigen der Fig. 6. Dort erkennt man um eine Nabe 60 herum gruppiert vier identisch ausgebildete Blätter 62, die die aus den Fig. 1 bis 4 bekannten Propellerform aufweisen:

annähernd im inneren Drittel des Propellerblattes 62 liegt die größte Tiefe und von dort ausgehend spitzt sich das Propellerblatt nach außenhin in der Tiefe und auch bezogen auf die Profildicke fast linear zu. Man erkennt dabei einen optimalen Winkel von ca. 17 - 20 Grad, den die Propellervorderkante 63 mit der Propellerhinterkante 64 einnimmt.

Die Ausführung nach Fig. 3 besitzt die gleiche Geometrie wie die der Fig. 6 in qualitativer Betrachtungsweise; in Bezug auf die absoluten Werte ist diese Form natürlich geringfügig anders . Der Bereich größter Tiefe 1 liegt im ersten Drittel, von der Nabe aus gesehen; die charakteristisch spitz zulaufende Form ist ebenfalls vorhanden; der Winkel ist jedoch erheblich kleiner: er beträgt hier annähernd $7 - 8^0$ . Gleichwohl ist auch hier die Blattgeometrie nach der Erfindung berechnet und ausgelegt.

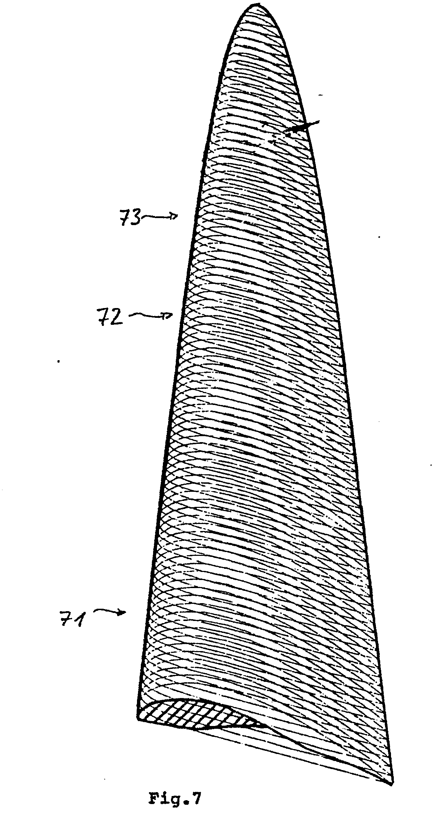

Die Blattspitzenkontur für geringste Lärmerzeugung und dennoch gutem Wirkungsgrad ergibt sich ebenfalls aus den erfindungsgemäßen Formeln. Eine solche Form ist in Fig. 7 näher dargestellt. Der dem Bereich 30 bzw. 40 (s. Fig. 1 oder 2) entsprechende, praktisch linear sich verjüngende Bereich 71 geht ab der mit 72 bezeichneten Grenze über in den Blattspitzenbereich 73, der am Ende abgerundet ausläuft.

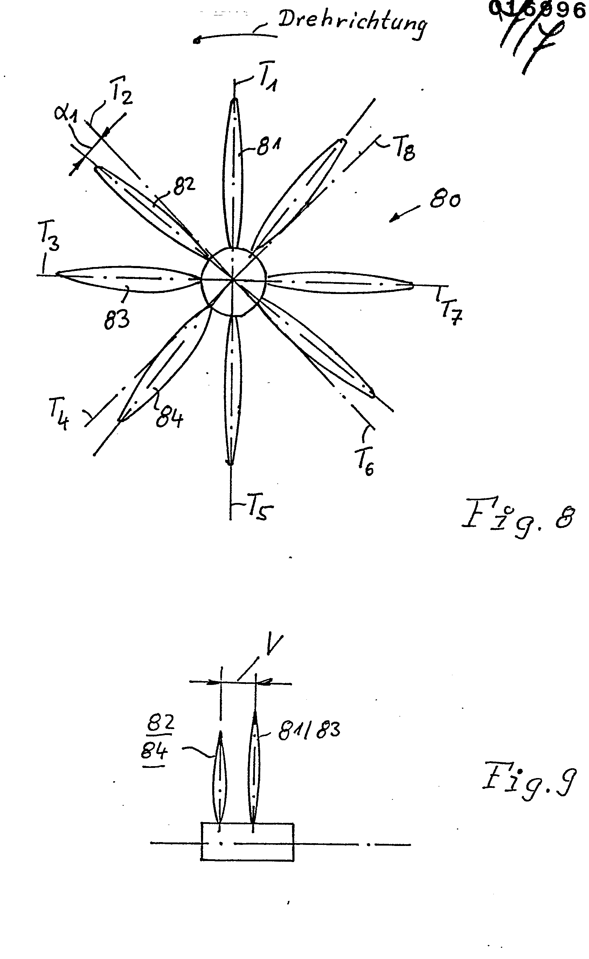

Die Fig. 8 und 9 zeigen zwei weitere Ausgestaltungen der Erfindung. In Fig. 8 ist die Vorderansicht eines acht-blättrigen Propellers 80 dargestellt, bei dem das eine über das andere Blatt winklig versetzt ist. Der Winkel beträgt $\alpha_1$ und ist in Drehrichtung von den regel- mäßigen Teilungslinien $T_1 \ldots T_8$ gezählt, so daß das Vversetzte Blatt 82 von dem Blatt 81 einen größeren Winkel entfernt ist als vom Blatt 83, u. s. w. Das Blatt 82 ist dann auch axial nach vorn um den Wert V versetzt, ebenso das Blatt 84 u. s. w. Hierdurch wird eine akustische Resonanz vermieden.

ANSPRÜCHE

1. Propeller, insbesondere zum Vortrieb eines langsam fliegenden Flächenflugzeuges, insbesondere eines Ultra-Leicht-Flugzeuges, dadurch gekennzeichnet, daß die Blattgeometrie des Propellers bei hoher Blattbelastung derart gewählt und ausgelegt ist, daß die Luftdurchsatzgeschwindigkeit durch die vom Propeller überdeckte Fläche über den Radius von der Nabe nach außenhin konstant ist.

2. Propeller nach Anspruch 1, dadurch gekennzeichnet, daß der Auftriebsbeiwert der Profilgeometrie über das gesamte Blatt konstant ist.

3. Propeller nach Anspruch 2, dadurch gekennzeichnet, daß die Tiefe ( l) des Propellers und der Einstellwinkel ($\varepsilon$) zur Erzielung eines konstanten Auftriebsbeiwertes ($c_a$-Wertes) folgender Formel folgt

$$l \approx k_1 \cdot r \; p^{2/3} \; \frac{V(r)}{k_2 \; p^{2/3} + (\omega \, r)^2}$$

worin:

$k_1$ = Konstante, abhängig von d, $\rho$ , $c_a$, B

$k_2$ = Konstante, abhängig von d, $\rho$

d = Durchmesser

V (r) = Verteiligungsfunktion, abhängig von r

-2-

$\varrho$ = Luftdichte

$c_a$ = Auftriebsbeiwert

B = Blattzahl

P = Motorleistung

r = Radius

$\omega$ = Winkelgeschwindigkeit

bedeuten, und

$$\varepsilon \approx \tan ( \text{arc} \tan \frac{k_3}{\omega \cdot r} - \alpha_o + ca \frac{1}{ca'} )$$

worin

$$k_3 \approx \sqrt[3]{\frac{p}{k_2}}$$

$\alpha_o$ = 0-Auftriebsanstellwinkel

$$ca' = \frac{d\,ca}{d\,\alpha}$$

$\alpha$ = Anstellwinkel

bedeuten.

4. Propeller nach einem der vorigen Ansprüche, dadurch gekennzeichnet, daß die Profildicke der Formel folgt:

$$d_1 \cong k_4 \tan ( \text{arc} \tan \frac{k_3}{\omega\,r} - \text{arc} \tan \frac{w}{\omega\,r} + k_5 )$$

worin

$k_4 = 0,261$

$k_5 = 15,7$

w = Fluggeschwindigkeit

bedeuten, und daß die Propellerprofilunterseite eine Gerade ist.

5. Propeller nach einem der vorigen Ansprüche, dadurch gekennzeichnet, daß das Propellerblatt annähernd von der Mitte aus, d. h. von mittleren Radius aus in einem spitzen Winkel sich annähernd linear verjüngt.

6. Propeller nach Anspruch 5, dadurch gekennzeichnet, daß der Verjüngungswinkel annähernd zwischen 10 bis 20 $^{\circ}$ , vorzugsweise bei etwa 14 bis 17 $^{\circ}$ liegt.

7. Propeller, dessen Blattspitzengeometrie nach den Formeln gemäß Ansprüchen 3 und 4 aus Lärmminderungsgründen berechnet ist.

8. Propeller insbesondere nach einem der vorigen Ansprüche, dadurch gekennzeichnet, daß das Verhältnis des Auftriebsbeiwertes zum Widerstandsbeiwert des Blattes mehr als 30 beträgt.

9. Propeller nach einem der vorigen Ansprüche, dadurch gekennzeichnet, daß die den gegebenen Randbedingungen entsprechende Geometrie der Propellerblätter über die gesamte Form (Radius) mathematisch beschreibbar ist.

10. Propeller nach einem der vorigen Ansprüche, daß die Teilung der Blätter bei vier-, sechs-, acht- und mehrblättrigen Propellern nicht konstant ist, um akustische Resonanzen zu vermeiden.

11. Propeller nach Anspruch 10, dadurch gekennzeichnet, daß zwei gegenüberliegende Blätter axial gegenüber den andern versetzt angeordnet sind, so daß die einzelnen Blätter sich nicht gegenseitig durch selbsterzeugte Wirbelschleppen beeinflussen.

12. Anwendung eines Propellers nach einem der vorigen Ansprüche, 1 bis 11, für langsamfliegende Flugzeuge, propellergetriebene Wasserfahrzeuge, mit begrenztem Einbauraum und/oder hoher Leistung, deren Leistungsumsetzung nur mit geringer Geräuschentwicklung erfolgen darf, sowie für leise laufende Lüftungsanlagen, Ventilatoren und dergl.

0169964

·1/7

Fig.1

Fig.2

0169964

Fig.3

53

52

50

51

Fig.4

Fig. 5

Fig.6

73 →

72 →

71 →

Fig.7

Drehrichtung

0168964

Fig. 8

Fig. 9

Europäisches
Patentamt

**EUROPÄISCHER RECHERCHENBERICHT**

**0169964**
Nummer der Anmeldung

EP 85 10 2612

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | 1979 NATIONAL FREE FLIGHT SOCIETY INTERNATIONAL SYMPOSIUM REPORT, Seiten 9-19, NFFS Publications, San Jose, California, US; E.E. LARRABEE: "Propeller design and analysis for modelers" * Seite 9, linke Spalte, Zeilen 22-38, 50-62; Seite 10, linke Spalte, Zeilen 1, 30-43; Seite 11, linke Spalte, Zeilen 18-22 * | 1 | B 64 C 11/18 |
| A | 1977 N.F.F.S. ANNUAL SYMPOSIUM REPORT, Seiten 90-98, N.F.F.S. Publications, San Jose, California, US; E.E. LARRABEE: "Analytic design of propellers having minimum induced loss" * Seite 94, linke Spalte, Zeilen 7-12 * | 1,2 | |
| | | | RECHERCHIERTE SACHGEBIETE (Int. Cl.4) |
| A | FR-A- 778 247 (MÜLLER) * Insgesamt * | 1,10, 11 | B 64 C |

Der vorliegende Recherchenbericht wurde für alle Patentansprüche erstellt.

| Recherchenort DEN HAAG | Abschlußdatum der Recherche 22-05-1985 | Prüfer ZERI A. |
|---|---|---|